# EUROPEAN PATENT APPLICATION

(11) **EP 0 530 364 A1**
(43) Date of publication of application: **10.03.1993**
(21) Application number: 92903721.6
(22) Date of filing: 28.01.1992
(51) Int. Cl.: G05B 19/405

(54) **INTERACTIVE NUMERICAL CONTROLLER**

(30) Priority: 28.01.1991 JP 26819/91
(71) Applicant: FANUC LTD., Minamitsuru-gun, Yamanashi 401-05 (JP)
(72) Inventor: MATSUMURA, Teruyuki Fanuc Dai-3 Vira-karamatsu, Minamitsuru-gun Yamanashi 401-05 (JP); MURATA, Koichi Fanuc Mansion Harimomi 10-204, Minamitsuru-gun Yamanashi 401-05 (JP)
(74) Representative: Otte, Peter, Dipl.-Ing.
(86) International application number: JP9200074
(87) International publication number: WO9213303

(57) **Abstract**

An interactive numerical controller having an animation drawing function, wherein at least the shapes of a work (42) and a tool (43) are graphically displayed at the time of machining simulation. The drawing is effected by superposing a grid (46) on the screen where the shapes of the work (42) and tool (43) are drawn. This makes it possible to quantitatively know the positions, movements and a change in shape of the work and the tool. Further, the grid width displayed on the screen is determined depending upon the magnification of drawing the shapes of work and tool and upon the unit length of grid represented by a graduate of grid. A relative display concentration of the grid can be further set arbitrarily.

## Description

### TECHNICAL FIELD

The present invention relates to an interactive numerical controller having an animation drawing function, and particularly to an interactive numerical controller that contributes to improving the administration and use of the machining simulations.

### BACKGROUND ART

In an interactive numerical controller, so far, the progress of simulation is displayed by animation at the time of executing a machining simulation, and a machining program prepared in an interactive manner is checked by utilizing such a machining simulation. When the machining simulation is carried out, the interactive numerical controller displays background animation on the display screen that is used in an interactive manner when an NC statement is to be prepared, and displays foreground animation when the NC statement is to be executed.

In the interactive numerical controller having such an animation drawing function, the shape of the work, tool, chuck, tail stock, etc. are displayed on the screen of a CRT display device, so that their positions, movements and changes in shape can be seen.

With the above-mentioned conventional apparatus, however, the positions, movements and changes in shape of the work, tool, chuck, tail stock, etc. could be qualitatively confirmed from the drawing screen, but could not be quantitatively confirmed at the time of executing the machining simulation. That is, though it could be confirmed that the machining program must be corrected as a result of the machining simulation, it was not obvious how much the correction should be effected in practice. It was therefore difficult to directly correct the machining program based on the screen on which are drawn work, tool, chuck, tail stock, etc., and NC data that are numerical had to be referred to in order to effect the correction.

### DISCLOSURE OF THE INVENTION

The present invention was accomplished in view of the above-mentioned points, and its object is to provide an interactive numerical controller that makes it possible to quantitatively see the positions, movements and changes in the shape of the work, tool, etc. at the time of effecting the machining simulation.

According to the present invention, there is provided an interactive numerical controller having an animation drawing function that displays, on the screen at least the shape of the work and tool at the time of effecting a machining simulation, comprising a grid drawing means that draws a grid on the screen on which the shape of the work and the shape of the tool have been drawn.

### BRIEF DESCRIPTION OF DRAWINGS

Fig. 1 is a block diagram illustrating an interactive numerical controller according to the present invention;
Fig. 2 is a diagram showing the screen of a machining simulation for checking NC data in the interactive numerical controller of the present invention;
Fig. 3 is a diagram showing the screen after a soft key "grid" of Fig. 2 is depressed;
Fig. 4 is a diagram showing the screen after a soft key "20" of Fig. 3 is depressed; and
Fig. 5 is a flow chart illustrating the processing procedure of a grid display using the interactive numerical controller of the present invention.

### BEST MODE FOR CARRYING OUT THE INVENTION

An embodiment of the present invention will be described hereinbelow with reference to the drawings.

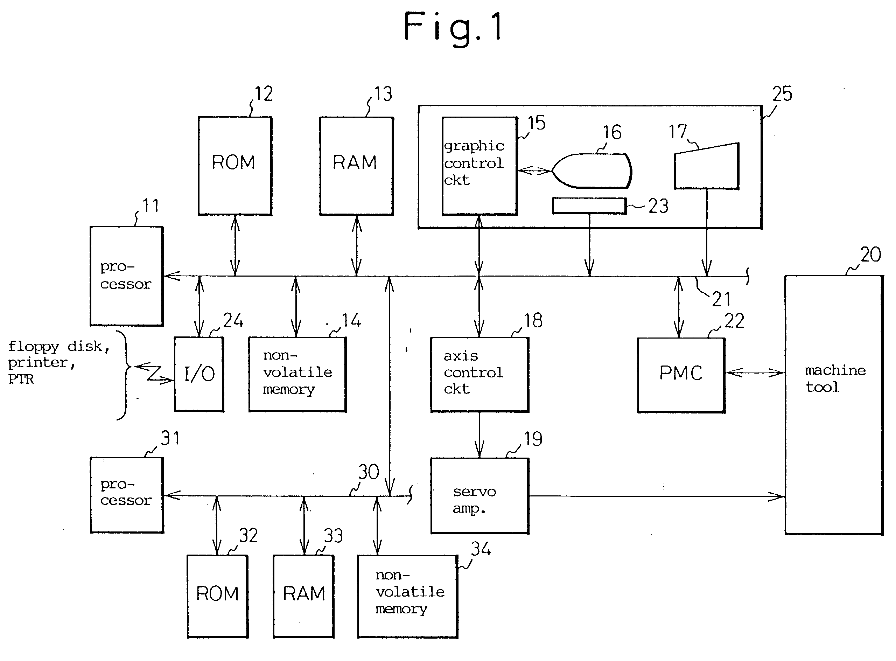

Fig. 1 is a block diagram illustrating an interactive numerical controller according to the present invention.

A processor 11 controls the whole numerical controller according to a system program stored in a ROM 12, which is made up of either an EPROM or an EEPROM. A RAM 13 is made up of an SRAM, which stores a variety of data or input and output signals. A non-volatile memory 14 is made up of a CMOS memory, which is backed up by a battery and which stores parameters, pitch error correction quantities and tool correction quantities that are to be held even after the power source has been interrupted.

A graphic control circuit 15 converts a digital signal input from the processor 11 into a signal for display and gives it to a screen display device 16. The screen display device 16 is made up of a CRT or a liquid crystal display device. The screen display device 16 displays the shape of the works and tools, processing conditions, as well as a prepared processing program.

A keyboard includes symbolic keys, numerical keys, etc., and required figure data and NC data are input using these keys.

Upon receipt of axis moving instructions from the processor 11, an axis control circuit 18 carries out position control and outputs a drive signal to a servo amplifier 19. Upon receipt of the drive signal, the servo amplifier 19 drives the servo motor of a machine tool 20. These constituent elements are coupled together through a bus 21.

During the execution of an NC program, a PMC (programmable machine controller) 22 receives a T-function signal (tool selection instruction) and like signals through the bus 21. The signals are processed in compliance with a sequence program, and the signals are output as operation instructions to control the machine tool 20. Upon receipt of status signals from the machine tool 20, furthermore, the PMC 22 executes a sequence processing and transfers necessary input signals to the processor 11 via the bus 21.

To the bus 21 are further connected a software key 23 whose function changes depending upon a system program or a like program, and a serial interface 24 that sends NC data to external equipment such as a floppy disk, a printer or a paper tape reader (PTR). The software key 23 is provided on a CRT/MDI panel 25 together with the screen display device 16 and the keyboard 17.

To the bus 21 is connected an interactive processor 31 having a bus 30 in addition to the processor 11 which is a CPU for NC. To the bus 30 are connected a ROM 32, a RAM 33 and a non-volatile memory 34.

The data of an image displayed on the screen display device 16 that are used to input the data in an interactive manner have been stored in the ROM 32. Shapes and positions of the work, tool, chuck, tail stock, etc. as well as a change in the shape of the work, and locus of movement of the tool are displayed as background animation on the interactive data input screen at the time of preparing an NC statement. Moreover, task or data that can be chosen on the input screen are displayed in the form of a menu on the screen display device 16; the menu includes a menu of grid display that is related to the present invention. Items of the menu are selected by using the software key 23 that has a plurality of switches arranged under the screen. The functions assigned to the switches of the software key 23 change for every screen. The RAM 33 is made up of an SRAM that stores a variety of data for interaction. The data related to the intervals of the grids and display depth associated with the present invention are all stored in the RAM 33.

The data that are input are processed by the interactive processor 31, and a work machining program is prepared. The program data that are prepared are sequentially displayed as background animation on the screen display device 16 that is used for the interactive input and output of data. Moreover, the work machining program stored as NC statements in the non-volatile memory 14 is executed even during the machining simulation of the machine tool 20 and is displayed as foreground animation.

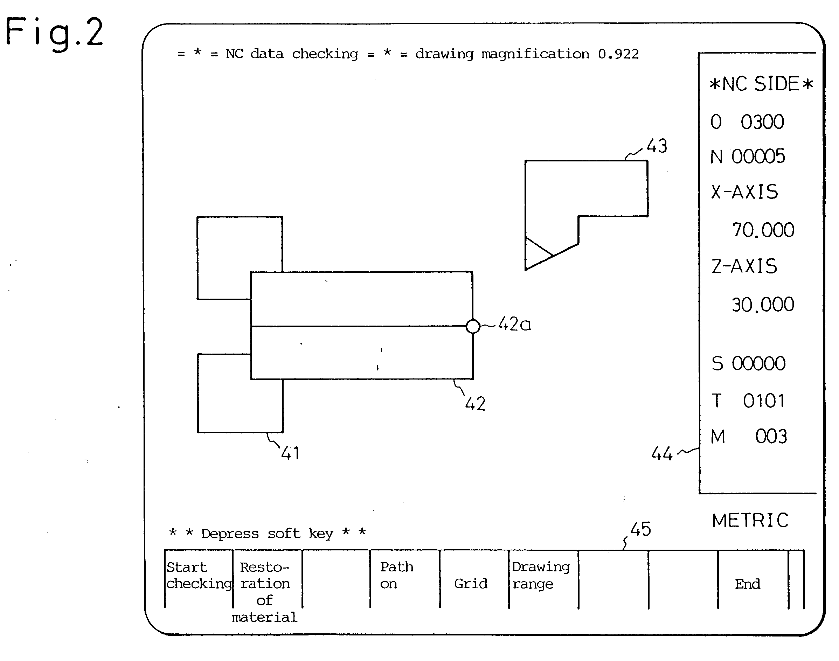

Figs. 2 to 4 show the machining simulation screen for checking the NC data by using the interactive numerical controller of the present invention, i.e., show a series of changes on the screen when the grid display is selected.

First, Fig. 2 shows the screen for starting the animation drawing. Here, contours of a work 42 gripped by a chuck 41 and of a tool 43 are displayed on the screen, and NC data 44 are displayed on the right corner. Function displays 45 of soft keys displayed at the lower portion on the screen correspond to the switches of the software key 23.

On the starting screen, the drawing magnification is set at 0.922. This magnification is determined as a reduction-scale value relative to the size of the work 42 by the processor 31 based on the data that are input in an interactive manner. The scaling function for determining the reduction-scale value has been set to the ROM 32 as a scaling program.

In the NC data 44, O denotes a program number, N denotes a block number, X-AXIS and Z-AXIS denote coordinate data for determining the tool position, S denotes data related to the spindle speed, T denotes a tool selection code, and M denotes an auxiliary function code.

When it is required to numerically see the positions, movements, and changes in the shapes of the chuck 41, work 42 and tool 43 (tail stock and the like may be often displayed, which, however, are not shown in this embodiment), a switch of the software key 23 corresponding to the function "grid" in the function display 45 is depressed on the starting screen.

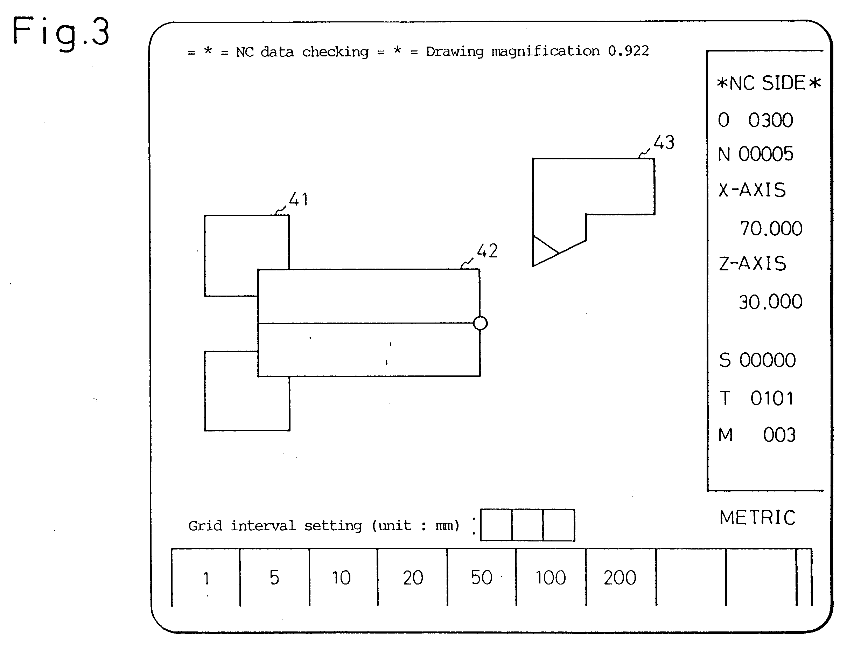

With the "grid" being turned on, the screen on the screen display device 16 is shifted to the screen of Fig. 3.

The interval of the grid is set on the screen of Fig. 3. That is, a unit length of the grid (unit in mm) indicated by a space between the grids is designated by using the software key 23. For instance, when "20" is turned on, the processor 31 reads the drawing magnification (which has been set to 0.922), calculates the interval of the grid (20 mm × 0.922 = 18.44 mm) that is to be displayed on the screen of the screen display device 16 from the drawing magnification 0.922 and the unit length of the grid of 20 mm, and instructs, based on the result of calculation, the screen display device 16 to draw the grid maintaining a gap of 18.44 mm.

It is of course allowable to directly input the width of the grid as numerical values using the keyboard 17 instead of using the software key 23.

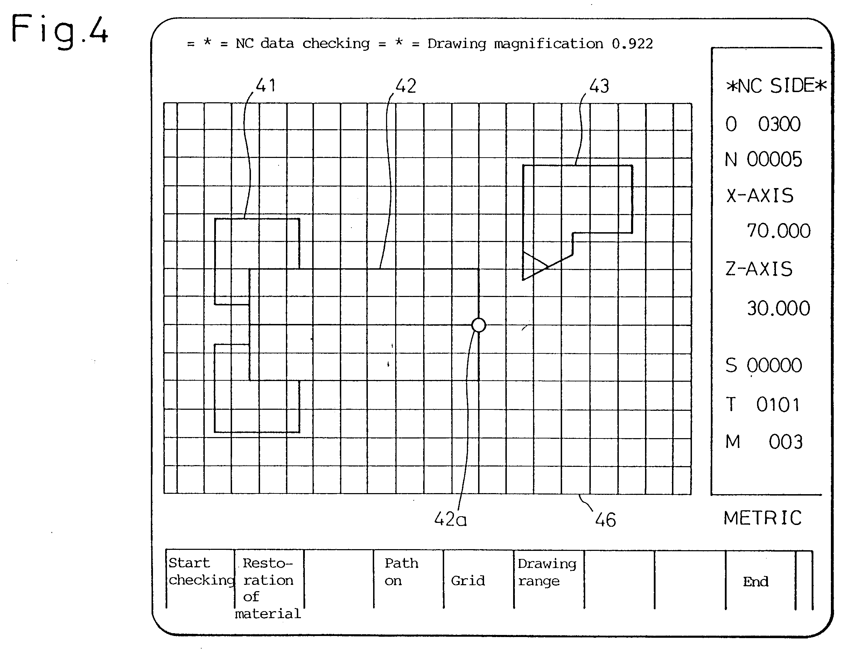

As a result of this instruction, the screen of Fig. 4 is displayed on the screen display device 16. That is, a grid 46 having graduations each representing 20 mm is superposed on the screen of Fig. 2 with the origin 42a of material as a reference, and whereby a screen is prepared as shown in Fig. 4. Thereafter, a soft key of "check start" is selected to check whether or not the machining program has any problem.

The grid 46 that is displayed makes it possible to numerically read the positions, movements and changes in the shapes of the chuck 41, work 42 and tool 43 during the checking of the machining program and, hence, directly correct the machining program based on the numerical values that are read out.

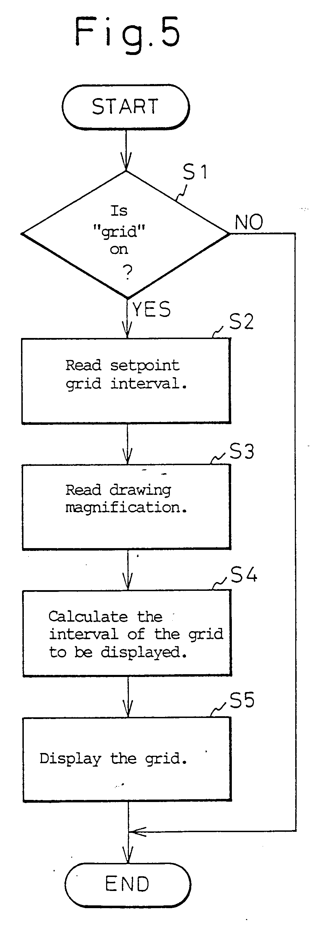

Fig. 5 is a flow chart illustrating the grid display processing procedure using the interactive numerical controller of the present invention, wherein numerals next to S represent step numbers. These processings are executed by the processor 31 in compliance with a control program stored in the ROM 32 shown in Fig. 1.
[S1] First, discriminate whether or not the soft key "grid" is turned on. When it is not turned on, the program ends and when it is turned on, the program proceeds to step S2.
[S2] Read unit length of grid indicated by a space between the grids that is set on the display screen shown in Fig. 3.
[S3] Read a predetermined drawing magnification of the shapes of the work, tool, etc.
[S4] Calculate the width of the grid to be displayed on the screen of the screen display device 16 based on the unit length of the grid and the drawing magnification read in the steps S2 and S3.
[S5] Send an instruction to the screen display device 16 so as to draw the grid maintaining a calculated grid width.

As a result of this instruction, the screen display device 16 displays a screen in which the grid 46 having a calculated grid interval as a graduation is superposed on the screen of Fig. 2.

Here, the length indicated by a graduation of the grid may be fixed. In the apparatus of this case, therefore, the above-mentioned step S2 needs not be executed, as a matter of course.

It is further allowable to use a CRT as the screen display device 16 in order to arbitrarily set a relative display depth of the grid. That is, the relative display depth of the grid with respect to the depth at which the shapes of the work and tool are displayed, is set to such a value that permits the screen to be easily watched, and the display depth of the grid is determined based on the above setpoint value in order to display the grid.

According to the present invention as described above, the interactive numerical controller having an animation drawing function is equipped with a grid drawing means that draws a grid on the screen on which at least the shape of work and the shape of tool have been drawn. It is therefore possible to quantitatively see the positions, movements and changes in the shapes of the work and tool at the time of effecting the machining simulation. It is therefore possible to directly correct the machining program based on the screen on which the work and tool are drawn without the need of making reference to the NC data.

Moreover, since the interval of the grid that is displayed is determined depending upon the magnification of the shapes of the work and tool and the unit length of the grid represented by a graduation of the grid, it is allowed to see the positions, movements and changes in the shapes of the work and tool in terms of correct numerical values.

Furthermore, since a relative display depth of the grid can be arbitrarily set, the screen is easy to watch despite the grid being superposed thereon.

## Claims

1. An interactive numerical controller having an animation drawing function that displays on the screen at least the shape of work and the shape of tool at the time of effecting a machining simulation, comprising a grid drawing means that draws a grid on the screen on which the shape of work and the shape of tool have been drawn.

2. An interactive numerical controller according to claim 1, wherein said grid drawing means determines the interval of the grid that is to be displayed on the screen depending upon the magnification of drawing the shape of work and the shape of tool; said magnification of drawing being read in advance.

3. An interactive numerical controller according to claim 2, further comprising a unit length setting means that sets the unit length of the grid represented by a space between the grids, and said grid drawing means determines the interval of the grid that is to be displayed on said screen depending upon said unit length of the grid and said magnification of drawing.

4. An interactive numerical controller according to claim 1, further comprising a depth setting means that sets the relative display depth of said grid, and said grid drawing means determines the display depth of said grid depending upon the thus set relative display depth.
